(19) Europäisches Patentamt
European Patent Office
Office européen des brevets

(11) **EP 4 516 731 A1**

(12) **EUROPEAN PATENT APPLICATION**

(43) Date of publication:
**05.03.2025 Bulletin 2025/10**

(21) Application number: **23194776.3**

(22) Date of filing: **01.09.2023**

(51) International Patent Classification (IPC):
***C01B 17/45*** (2006.01) ***B01J 19/12*** (2006.01)

(52) Cooperative Patent Classification (CPC):
**C01B 17/453; B01J 19/123**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Universität Innsbruck**
**6020 Innsbruck (AT)**

(72) Inventors:
- **Sietmann, Alexander**
  **6020 Innsbruck (AT)**
- **Dielmann, Fabian**
  **6020 Innsbruck (AT)**

(74) Representative: **Schwarz & Partner Patentanwälte GmbH**
**Patentanwälte**
**Wipplingerstraße 30**
**1010 Wien (AT)**

(54) **METHOD FOR DECOMPOSING SULFUR HEXAFLUORIDE**

(57) A method for decomposing $SF_6$ comprising the steps (a) providing a solution of an alkali metal hydroxide in an alcohol of formula R-HCOH-R', wherein R and R' independently are selected from H, $C_1$ to $C_6$ - alkyl; cyclohexyl, cyclopentyl, methyl cyclopentyl, or $C_1$ to $C_6$ - alkoxy, (b) contacting the solution with $SF_6$ (c) exposing the solution with $SF_6$ in a closed vessel to electromagnetic radiation at a wavelength of between 240 nm to 300 nm, until $SF_6$ is decomposed.

EP 4 516 731 A1

## Description

The present invention relates to a method for decomposing sulfur hexafluoride $SF_6$.

### BACKGROUND OF THE INVENTION

Because of its unique chemical and physical properties sulfur hexafluoride ($SF_6$) is used in various industries, including magnesium and aluminum manufacturing, the electronics industry, particle accelerators, optical fiber manufacturing, photovoltaics, military and medical applications. Most of the $SF_6$ produced worldwide is used in the power industry, especially in medium and high voltage applications.

Due to the significant greenhouse potential of $SF_6$, it must not be released into the atmosphere and its use is subject to strict recycling and disposal requirements in many countries. The method of choice for disposal of $SF_6$ waste gas is thermal decomposition (pyrolysis) by injection into a reaction furnace at over 1100 °C. During pyrolysis highly reactive components are formed resulting *inter alia* $SO_2$, $SO_3$, HF which have to be transformed to $CaSO_4$ and $CaF_2$ by a sorbent in a second step. Pyrolysis of $SF_6$ is very energy intensive and the sorbent is consumed during the reaction, which further increases operating costs. Regarding operational safety, the process is not without problems due to the presence of toxic gases.

In addition to the thermal decomposition methods, alternative processes have been developed in recent years, in which the decomposition of $SF_6$ is carried out by means of non-thermal plasma, photolysis, electrochemistry or reductive-chemical methods. However, these processes have not yet found application because some of these processes have significant disadvantages in terms of decomposition rate, operating and acquisition costs, or operational safety.

Non-thermal plasma decomposition methods include radio frequency (RF) plasma, microwave plasma, electron beam (EB) plasma, and dielectric barrier discharge (DBD) plasma methods. Even though a lower energy input compared to the thermal decomposition of $SF_6$ is required, still highly toxic gases are formed during the decomposition of $SF_6$ in the plasma, which must be bound by a suitable sorbent.

Electrochemical methods for decomposing $SF_6$ show low efficiency, low turnover rates, and are largely unexplored.

Numerous chemical reactions of strongly reducing substances with $SF_6$ are known. In most cases, the decomposition of $SF_6$ is initiated by electron transfer to the $SF_6$ molecule. Among the most promising methods is the reaction of $SF_6$ with alkali metals in liquid ammonia. However, such reactions must be carried out under inert gas conditions and require the use of toxic solvents.

Direct photolysis of $SF_6$ requires high energy UV radiation (< 160 nm). Matrix isolation experiments have shown that the $SF_6/H_2O$ system reacts in a xenon matrix under laser irradiation (193 nm) with cleavage of the S-F bond. It has also been shown that $SF_6$ can be degraded by UV irradiation (185 nm) of gaseous mixtures of $SF_6$ with acetone, styrene or isoprene (Li Huang, et al. "Investigation of a new approach to decompose two potent greenhouse gases: Photoreduction of SF6 and SF5CF3 in the presence of acetone", Chemosphere, 66 (5), 2007, 833-840; https://doi.org/10.1016/j.chemosphere.2006.06.028.). Thereby, the photolytic fragmentation of the additive generates reactive particles which react with $SF_6$. However, these processes are unselective and produce several gaseous and partly toxic products that require appropriate post-treatment. Furthermore, it is known that phosphines, Mg/MgO nanoparticles and $TiO_2$ surfaces promote the decomposition of $SF_6$ under UV irradiation. Generally, the conversion rates and the removal efficiency with photochemical methods are low and require short wavelength UV radiation.

### BRIEF DESCRIPTION OF THE INVENTION

Hence, it is an object of the invention to provide a method for decomposing $SF_6$ into non-toxic compounds which is selective, has high yields and has low costs.

This object is solved by a
method for decomposing $SF_6$ comprising the steps

(a) providing a solution of an alkali metal hydroxide in an alcohol of formula R-HCOH- R', wherein R and R' independently are selected from H, $C_1$ to $C_6$ - alkyl; cyclohexyl, cyclopentyl, or $C_1$ to $C_6$ - alkyloxy,
(b) contacting the solution with $SF_6$, and
(c) exposing the solution with $SF_6$ to electromagnetic radiation at a wavelength of between 240 nm to 300 nm, preferably between 270 nm and 290 nm, until $SF_6$ is decomposed.

The inventors found that $SF_6$ can be easily decomposed by a solution of alkali metal hydroxides in alcohols under simultaneous irradiation of the $SF_6$ in contact with the solution with UV radiation. The process is technically simple and scalable and has application potential for energy-efficient disposal of $SF_6$ on small and large scale.

The alcohol is oxidized into an aldehyde or ketone and $SF_6$ is converted into a sulfite. Based on an example reaction with KOH as alkali metal hydroxide and propan-2-ol as the alcohol, the reaction mechanism is based on the following equations:

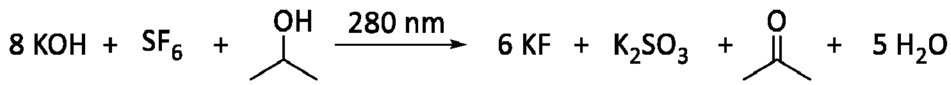


(1.)

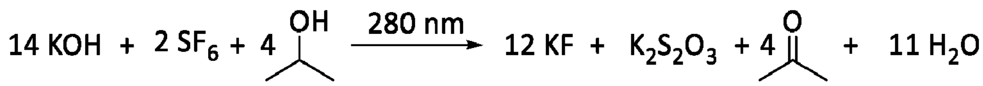


(2.)

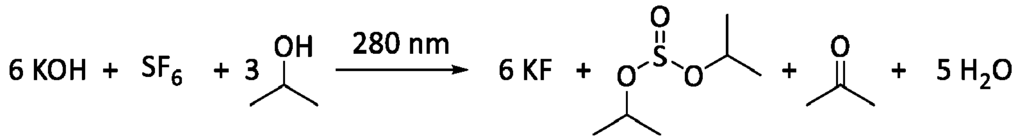


(3.)

Hence, the photochemical decomposition of $SF_6$ in a mixture of KOH and secondary alcohols proceeds with oxidation of the alcohol to the ketone and reduction/hydrolysis of $SF_6$ to potassium sulfite ($K_2SO_3$), potassium thiosulfate ($K_2S_2O_3$) or diisopropyl sulfite ($iPr_2SO_3$) and potassium fluoride (KF). The main product containing sulfur is sulfite, as diisopropyl sulfite is hydrolyzed to give sulfite and propan-2-ol under the basic reaction conditions.

Alternatively, NaOH can be used resulting in $Na_2SO_3$, $Na_2S_2O_3$, $iPr_2SO_3$ and NaF or mixtures of NaOH and KOH can also be used. A primary alcohol can be used instead of a secondary alcohol. The reaction conditions are set that preferably per 1 Mole of $SF_6$ to be decomposed, at least 8 Moles of metal hydroxide are provided in the solution. Preferably, the metal hydroxide is NaOH, KOH or a mixture thereof.

The reaction does not require special temperature control. Thus, it can be carried out at room temperature (15 °C to 30 °C). Ideally, the reaction is carried out in a closed vessel.

Decomposition of $SF_6$ in step (c) can be checked by monitoring the $SF_6$ consumption in the reaction vessel.

This invention describes a new method for decomposing $SF_6$ selectively and quantitatively into non-toxic compounds, by simply using a primary or secondary alcohol, a base and UV-B or UV-C radiation. The preferred wavelength of the UV radiation is light with a wavelength of between 240 nm to 300 nm, preferably between 270 nm and 290 nm.

While the reaction of $SF_6$ with aqueous solutions of KOH or NaOH in the absence of an alcohol is extremely slow, the addition of the alcohol instead of water as solvent speeds up the reaction considerably, especially when secondary alcohols such as isopropanol are used. The alcohol increases the solubility of $SF_6$ in the liquid phase and serves as a reducing agent. Secondary alcohols are particularly effective, because they get reduced to the corresponding ketones during the reaction and the ketones increase the rate of the $SF_6$ decomposition, presumably due to the generation of ketyl radicals. As outlined above, no gaseous products are formed because the decomposition in the basic medium is selective. The selective product formation also facilitates the utilization of the reaction products. Other advantages of the invention include low equipment cost due to the simple design, low energy consumption, and the fact that no toxic chemicals are used or formed in the process.

The alcohol is preferably a secondary alcohol, so R' and R are each independently selected from $C_1$ to $C_6$ - alkyl; cyclohexyl, cyclopentyl, methyl cyclopentyl, or $C_1$ to $C_6$ - alkoxy. More preferably, R and R' is selected from $C_1$ to $C_3$ - alkyl; $C_1$ to $C_3$ - alkoxy.

Most preferably, the alcohol is selected from the group consisting of isopropanol, butan-2-ol, ethanol and mixtures thereof.

It has been found out that small amounts of a ketone can accelerate the $SF_6$ decomposition. Hence, it is preferred that the solution further comprises a ketone, preferably acetone, butanone.

Definitions:

$C_1$ to $C_6$ - alkyl means an alkyl group with 1 to 6 carbon atoms. The alkyl group may be a straight-chain alkyl or a branched alkyl.

$C_1$ to $C_6$ - alkoxy means an alkyl group with 1 to 6 carbon atoms. The alkyl group may be a straight-chain alkyl or a branched alkyl.

$C_1$ to $C_6$ - alkoxy means an alkyl group with 1 to 6 carbon atoms being singularly bonded to oxygen (R-O with R being the alkyl group which 1 to 6 carbon atoms). The alkyl group of the alkoxy may be a straight-chain alkyl or a branched

alkyl.

DETAILED DESCRIPTION OF THE INVENTION

Further details of the invention are described below in connection with examples.

Fig. 1 shows an $SF_6$ consumption time plot obtained by the $SF_6$ monitor on the $SF_6$ uptake by the reaction mixture.
Fig. 2 shows an $^1$H NMR spectrum (400 MHz) of the collected volatiles in $CDCl_3$ (Pyrazine was added as internal standard, *$CHCl_3$). $\delta$ = 8.52 (s, $C_4H_4N_2$), 4.70 (sept., $^3J_{HH}$ = 6.2 Hz, OS{OC*H*Me$_2$}$_2$), 3.92 (sept., $^3J_{HH}$ = 6.1 Hz, HOC*H*Me$_2$), 2.76 (s, $H_2O$), 2.09 (s, OC{C*H*$_3$}$_2$), 1.26 (d, $^3J_{HH}$ = 6.2 Hz, OS{OCH[C*H*$_3$]$_2$}$_2$), 1.23 (d, $^3J_{HH}$ = 6.2 Hz, OS {OCH[C*H*$_3$]$_2$}$_2$), 1.11 (d, $^3J_{HH}$ = 6.1 Hz, HOCH{C*H*$_3$}$_2$) ppm.
Fig. 31 shows an $^{13}$C{$^1$H} NMR spectrum (101 MHz) of the collected volatiles in $CDCl_3$ (Pyrazine was added as internal standard, *$CDCl_3$). $\delta$ = 207.5 (s, O*C*Me$_2$), 68.4 (s, OS{O*C*HMe$_2$}$_2$), 64.0 (s, HO*C*HMe$_2$), 30.9 (s, OC{*C*H$_3$}$_2$), 25.2 (s, HOCH{*C*H$_3$}$_2$), 23.5 (s, OS{OCH[*C*H$_3$]$_2$}$_2$) ppm.
Fig. 4 shows the $SF_6$ consumption time plot obtained by the $SF_6$ monitor demonstrating the influence of the solvent on the $SF_6$ uptake by the reaction mixture.
Fig. 5 shows the $SF_6$ consumption time plot obtained by the $SF_6$ monitor demonstrating the influence of additives on the $SF_6$ uptake by the EtOH/KOH system.
Fig. 6 shows the $SF_6$ consumption time plot obtained by the $SF_6$ monitor demonstrating the influence of ketone additives on the SF6 uptake by the reaction mixture.
Fig. 7 shows the $SF_6$ consumption time plot obtained by the $SF_6$ monitor demonstrating the influence of the initial gaseous components on the $SF_6$ uptake by the reaction mixture.
Fig. 8 shows the $SF_6$ consumption time plot obtained by the $SF_6$ monitor demonstrating the influence of the SF6 pressure on the uptake by the reaction mixture.
Fig. 9 shows the $SF_6$ consumption time plot obtained by the $SF_6$ monitor demonstrating the influence of the KOH concentration on the $SF_6$ uptake by the reaction mixture.
Fig. 10 shows the $SF_6$ consumption time plot obtained by the $SF_6$ monitor demonstrating the influence of the light intensity on the $SF_6$ uptake by the reaction mixture.
Fig. 11 shows the $SF_6$ consumption time plot obtained by the $SF_6$ monitor demonstrating the influence of the KOH concentration on the $SF_6$ uptake by the reaction mixture Fig. 12 shows UV-vis spectra of the KOH/iPrOH system.
Fig. 13 shows UV-vis spectra of the KOH/EtOH system.

### 1. Materials and Methods

#### 1.1. Materials

Sulfur hexafluoride 3.0 (99.9%) was generously donated by the company DILO GmbH. All other compounds were purchased from commercial sources and used as received if not stated otherwise. The alcohols used and their commercial source are as follows: methanol (HPLC grade 99.8%; FisherSci); ethanol (technical grade 96%, contains 1% isopropanol, Donauchem); n-propanol (p.a. 99.5%; Sigma Aldrich), isopropanol (technical grade 98%; VWR), isopropanol (HPLC grade 99.9%; Sigma Aldrich), n-butanol (99.9%; Sigma Aldrich), sec-butanol (ReagentPlus, 99%, Sigma Aldrich), 2-methyl-2-pentanol (99%; Sigma Aldrich), n-hexanol (98%; VWR), ethylene glycol (spectrophotometric grade 99%; Sigma Aldrich), 1-methoxypropan-2-ol (ReagentPlus 99.5%; Sigma Aldrich), 2-propoxyethanol (98%; TCI), acetone (ACS reagent grade 99.5%; Sigma Aldrich), butanone (HPLC grade 99%, Sigma Aldrich). Potassium hydroxide was obtained from Sigma Aldrich (pellets, >85%). The water content of potassium hydroxide was determined by titration using an aqueous HCl solution (1 M) and bromothymol blue.

#### 1.2. Light sources

All photolysis experiments were carried out using quartz glassware. The following LED light sources were used for the irradiation experiments: VCClilte LED Typ VAOL-SA1xAx-SA (585 nm) and Seoulviosys LED Typ CUD1KFMA (310 nm) within a custom-build irradiation setup, EvoluChem™ LED 405PF (405 nm) and EvoluChem™ LED 365PF (365 nm) within the EvoluChem PhotoRedOx Box™, Led-Tech XBT-3535-UV LED (280 nm) in a self-built setup. In addition, a high intensity mercury-xenon lamp (Hamamatsu 200W Mercury Xenon 365nm wide band L9566-06A) was used with a spectral distribution of 240 to 550 nm.

### 1.3. Analytical Methods

**$^1H$, $^{13}C$ and $^{19}F$ NMR spectroscopy** was performed on Bruker AVANCE I 400 or Bruker ACANCE III 400 spectrometers. Chemical shifts are given in parts per million (ppm) relative to $SiMe_4$ ($^1H$, $^{13}C$) or $CFCl_3$ ($^{19}F$) and they were referenced to the residual solvent signals ($CDCl_3$: $^1H$ $\delta_H$ = 7.26, $^{13}C$ $\delta_C$ = 77.16). Chemical shifts ($\delta$) are reported in ppm. NMR multiplicities are abbreviated as follows: s = singlet, d = doublet, sept = septet. For the determination of yields using NMR spectroscopy, quantitative $^{19}F$ NMR ($^{19}F$ qNMR) and $^1H$ NMR experiments were performed with increased relaxations time (D1 = 25 seconds).

**Capillary electrophoresis (CE)** was performed for ion analysis using a capillary electrophoresis apparatus from *Agilent,* a C4D conductivity detector from *TraceDec* and a capillary from *Polymicro Technologies* with an inner diameter of 50 $\mu$m.

**UV-vis absorption spectroscopy** was carried out on a *PerkinElmer* LAMBDA XLS+ spectrophotometer using standard quartz UV/vis cuvettes (d = 1 cm).

**pH determination** was carried out using an *inoLab® pH 7110* meter. Prior to measurements a two-point calibration was done using two technical puffers (buffer solution pH 7.00 and buffer solution pH 4.00 from Carl Roth).

**Monitoring of the $SF_6$ consumption** was done by a self-built electrical pressure control unit ($SF_6$-monitoring device or $SF_6$-monitor). The readout and pressure control were done using an Arduino Nano E/A-Board with an ATmega328 microcontroller. The pressure regulation unit consists of an inlet tube of 3 bar $SF_6$ from gas storage cylinder that is attached to a magnetic valve. The outlet of the magnetic valve is connected to a piezo-resistive silicon pressure sensor and the reaction vessel using a T-piece adapter. When the pressure in the reaction vessel drops below a given threshold, the magnetic valve opens for a fixed time interval of 10 $\mu$s. The number of cycles thus corresponds to a defined $SF_6$ consumption in the reaction. A calibration experiment reveals a consumption of $SF_6$ per cycle of 0.04 mmol at a given $SF_6$ storage cylinder pressure of 3 bar and reaction vessel pressure of 2 bar (Equation a). The resulting data (saved as a .csv file) consists of the time, the number of cycles of the magnetic valve, and the pressure in the reaction vessel. The data was imported to *OriginPro* and the number of cycles of the magnetic valve was plotted against the reaction time.

$$n(\mathrm{SF_6\ per\ cycle}) = \frac{n(\mathrm{SF_6\ consumption})}{\mathrm{numbers\ of\ cycles\ of\ the\ magnetic\ valve}} \qquad \text{(a)}$$

### 1.4. Experimental Procedures

Three different reaction setups were used for the photolysis experiments depending on the volume of the reaction mixture.

**Reaction Setup 1** was used for the irradiation of a volume of 1 mL. A quartz NMR tube (diameter 5 mm) containing the reaction mixture was pressurized with 3 bar $SF_6$ and the sealed tube was subsequently irradiated for a given time.

**Reaction Setup 2** was used for the irradiation of a volume of 15 mL. A quartz tube (diameter 17 mm) containing the reaction mixture under 2 bar $SF_6$ atmosphere was irradiated for a given time and the $SF_6$ consumption was monitored using the $SF_6$-monitor.

**Reaction Setup 3** was used for the irradiation of a volume of 80 mL. A borosilicate glass tube (diameter 42 mm) containing the reaction mixture was sealed with a quartz sight glass. The $SF_6$ pressure was set to 2 bar and the consumption was monitored using the $SF_6$-monitor.

## 2. Photochemical degradation of $SF_6$ in basic solutions

### 2.1. Screening of the base with isopropanol as the solvent using Reaction Setup 1

Preliminary screening of LiOH, NaOH, KOH, and $Ca(OH)_2$ shows that the $SF_6$ degradation is most effective when KOH is used as the base.

### 2.2. Screening of the solvent with KOH as the base using Reaction Setup 1

**General Procedure:** Potassium hydroxide powder (30.0 mg, 0.464 mmol) was dissolved in the solvent (1 ml) indicated in Table 1 and the solution was transferred into an NMR tube. The tube was pressurized with $SF_6$ (3 bar), vigorously shaken and irradiated with light at 280 nm for one hour. The resulting reaction mixture was transferred into a vial and the volatiles were evaporated under reduced pressure to afford a solid residue consisting of a mixture of inorganic salts (e.g. KF, $K_2SO_3$). The residue was dissolved in water and the content of KF was determined using quantitative $^{19}F$ NMR

spectroscopy with potassium triflate (10.0 mg, 0.0531 mmol) as internal standard. Assignment of the $^{19}F$ NMR resonances: $\delta$ = 58.5 ($SF_6$), -78.6 ($OTf^-$), -119.1 ($F^-$) ppm. As solvent water and different alcohols were used. The results are summarized in Table 1.

Table 1: Yields based on fluoride formation, determined by $^{19}F$ qNMR spectroscopy, relative to the amount of KOH used assuming that 8 KOH are consumed per $SF_6$ molecule according to the following equation: 8 KOH + $SF_6$ + alcohol $\rightarrow$ 6 KF + $K_2SO_3$ + 5 $H_2O$ + aldehyde/ketone.

| Entry | Solvent | Yield (%) |
|---|---|---|
| 1. | water | 0.1 |
| 2. | methanol | 2 |
| 3. | ethanol (abs.) | 4 |
| 4. | ethanol (tech.) | >99 |
| 5. | ethanol (abs.) + water | 3 |
| 6. | ethanol (abs.) + butanone | >99 |
| 7. | ethanol (abs.) + acetone | >99 |
| 8. | *n*-propanol | 16 |
| 9. | isopropanol (tech.) | >99 |
| 10. | isopropanol (HPLC grade) | >99 |
| 11. | *n*-butanol | 13 |
| 12. | *sec*-butanol | 95 |
| 13. | 2-methyl-2-pentanol* | 8 |
| 14. | *n*-hexanol | 3 |
| 15. | ethylene glycol | 0.4 |
| 16. | 1-methoxypropan-2-ol | 81 |
| 17. | 2-propoxyethanol | 2 |

**2.3 Irradiation wavelength dependence of $SF_6$ degradation using the KOH/iPrOH system**

A quartz glass NMR tube was charged with a solution of potassium hydroxide (30.0 mg, 0.464 mmol) in technical grade isopropanol (1 ml). Then, the quartz NMR tube was pressurized with $SF_6$ (3 bar), shaken vigorously, and irradiated with light at different wavelength for 1 h. The resulting reaction mixture was analysed by $^{19}F$ NMR spectroscopy showing that no reaction took place using light at 585 nm, 405 nm or 365 nm, while the fluoride resonance was detected for irradiation experiments with light at 310 nm, 280 nm and 240-550 nm. To determine the reaction yields, the reaction mixture was transferred into a vial and the volatiles were evaporated under reduced pressure. The resulting mixture of inorganic salts (e.g. KF, $K_2SO_3$) was dissolved in water and the fluoride content was determined using quantitative $^{19}F$ NMR spectroscopy with potassium triflate (10.0 mg, 0.0531 mmol) as internal standard. The results of experiments using different wavelengths for the electromagnetic radiation is summarized in Table 2.

Table 2: Yields based on fluoride formation, determined by $^{19}F$ qNMR spectroscopy, relative to the amount of KOH used assuming that 8 KOH are consumed per $SF_6$ molecule according to the following equation: 8 KOH + $SF_6$ + iPrOH $\rightarrow$ 6 KF + $K_2SO_3$ + 5 $H_2O$ + acetone.

| Wavelength (nm) | Yield (%) |
|---|---|
| 585 | 0 |
| 405 | 0 |
| 365 | 0 |
| 310 | 0.06 |
| 280 | >99 |

(continued)

| Wavelength (nm) | Yield (%) |
|---|---|
| 240-550 | 82 |

### 2.4. Analysis of $SF_6$ degradation reaction products using the KOH/iPrOH system

Using Reaction Setup 2, a quartz tube (diameter 17 mm) was charged with a solution of potassium hydroxide (1.00 g, 15.5 mmol) in technical grade isopropanol (15 ml). The solution was degassed by four freeze-pump-thaw cycles and the reaction tube was pressurized with $SF_6$ (2 bar). The reaction mixture was irradiated for 2 h with light at 280 nm and the consumption of $SF_6$ was monitored using the $SF_6$-monitor. A white precipitate was formed during the reaction. The volatiles were distilled off at 100 °C *in vacuo* for 3 hours. The collected volatile components and the remaining solid components were analyzed as follows:
Volatile components: An aliquot of 0.1 mL of the resulting solution was dissolved in $CDCl_3$ and analyzed by NMR spectroscopy: No F-containing compound was detected via $^{19}F$ NMR spectroscopy; $^1H$ and $^{13}C$ NMR spectroscopy showed the resonances of isopropanol, acetone and diisopropyl sulphite. The total amount of these compounds was determined by integration of $^1H$ NMR resonances using pyrazine (10.0 mg, 0.125 mmol) as internal standard:

| *Compound* | *Total amount formed in the reaction* |
|---|---|
| isopropanol | 193.06 mmol |
| acetone | 1.96 mmol |
| diisopropyl sulfite | 0.49 mmol |

Solid components: The mixture of inorganic salts was analysed by NMR spectroscopy, capillary electrophoresis (CE) and by a pH meter.

For the analysis by NMR spectroscopy, 52 mg of the mixture of inorganic salts was dissolved in water and potassium triflate (10.0 mg, 0.0531 mmol) was added as internal standard. No resonances of C-containing compounds were detected by $^{13}C\{^1H\}$ NMR spectroscopy. The amount of fluoride formed in the reaction was determined using $^{19}F$ qNMR spectroscopy:

| *Compound* | *Total amount formed in the reaction* |
|---|---|
| KF | 12.3 mmol |

To determine the total amount of ions formed in the reaction, 10 mg of the mixture of inorganic salts was diluted with 0.2 L water to afford a solution with a concentration of 50 mg/L. The solution was analyzed by capillary electrophoresis (CE):

| *Ion* | *Mass concentration determined by CE (mg/L)* | *Total amount formed in the reaction* (mmol)* |
|---|---|---|
| $F^-$ | 12.00 | 11.91 |
| $SO_3^{2-}$ | 5.77 | 1.32 |
| $SO_4^{2-}$ | 0.24 | 0.047 |
| $S_2O_3^{2-}$ | 0.52 | 0.084 |
| *calculated according to the following equation | | |

$$n(\mathrm{Ion}) = \frac{\beta(\mathrm{Ion}) \cdot V(\mathrm{dilution}) \cdot 94^*}{M(\mathrm{Ion})}$$

To determine the pH of the stock solution of inorganic salts, 0.5 ml of the stock solution was diluted to 20 ml with water and a pH of 8.2 was measured using a pH meter. In a separate experiment, a solution of potassium sulfite with similar concentration showed a pH of 8.9. To further confirm that all potassium hydroxide had been consumed in the $SF_6$

decomposition reaction, 0.1 ml of potassium hydroxide (0.1 M) was added to the stock solution of inorganic salts which resulted in a pH of 9.8.

The characterization data of the volatile and solid components suggest that three equations need to be considered in the photochemical $SF_6$ degradation reaction:

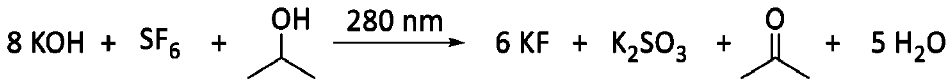


(1.)

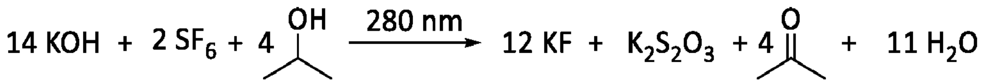


(2.)

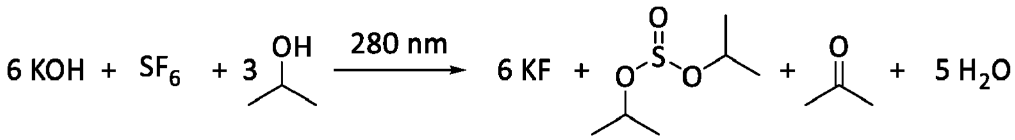


(3.)

The weighting of the individual reaction equations is based on results of the CE using the relative amounts of the S-containing compounds and the total amount of fluoride:

$$n(S_{overall}) = \frac{n(F^-)}{6} \qquad (4.)$$

$$n(S_{overall}) = \frac{11.91\ \text{mmol}}{6} = 1.99\ \text{mmol}$$

$$n(S_{overall}) = n(SO_3{}^{2-}) + n(S_2O_3{}^{2-}) \cdot 2 + n(\text{iPrO})_2\text{SO}) \qquad (5.)$$

$$n(\text{iPrO})_2\text{SO}) = 1.99\ \text{mmol} - 1.42\ \text{mmol} - 0.06\ \text{mmol} \cdot 2 = 0.47$$

Table 3: Weighting of the reaction equations (2)-(4).

| Equation *i* | weighting factor $w_i$ |
|---|---|
| 1 | 0.71 |
| 3 | 0.06 |
| 4 | 0.24 |

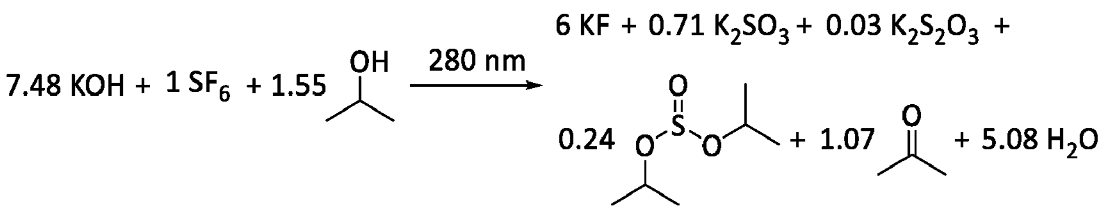


By considering the weighting scheme of Table 3 and based on the initial amount of KOH (15.5 mmol), the theoretical yield of KF is calculated to be 12.06 mmol, which is in agreement with the experimental values obtained by $^{19}F$ qNMR spectroscopy (12.3 mmol) and by CE (11.9 mmol).

$$n_{\text{calc.}}(\text{KF}) = n(\text{SO}_3{}^{2-}) \cdot 6 + n(\text{S}_2\text{O}_3{}^{2-}) \cdot 12 + n(\text{iPrO})_2\text{SO}) \cdot 6 \qquad (6.)$$

$$n_{\text{calc.}}(\text{KF}) = 1.42 \text{ mmol} \cdot 6 + 0.06 \text{ mmol} \cdot 12 + 0.47 \text{ mmol} \cdot 6 = 12.06 \text{ mmol}$$

By considering the weighting scheme of Table and based on the initial amount of KOH (15.5 mmol), the theoretical yield of acetone is calculated to be 2.13 mmol, which is in agreement with the experimental values obtained by $^1$H NMR spectroscopy (1.96 mmol).

$$n_{\text{calc.}}(\text{acetone}) = n(\text{SO}_3{}^{2-}) \cdot 1 + n(\text{S}_2\text{O}_3{}^{2-}) \cdot 4 + n(\text{iPrO})_2\text{SO}) \cdot 1 \qquad (7.)$$

$$n_{\text{calc.}}(\text{acetone}) = 1.42 \text{ mmol} \cdot 1 + 0.06 \text{ mmol} \cdot 4 + 0.47 \text{ mmol} \cdot 1 = 2.13 \text{ mmol}$$

The results are shown in Fig. 1, Fig. 2 and Fig. 3.

**2.5 Influence of the solvent on the $SF_6$ degradation rate using KOH as the base and Reaction Setup 2**

**General Procedure:** A quartz tube (diameter 17 mm) was charged with a solution of potassium hydroxide (1.00 g, 15.5 mmol) in the solvent (15 ml) indicated in Table 4. The solution was degassed by four freeze-pump-thaw cycles and the reaction tube was pressurized with $SF_6$ (2 bar). The reaction mixture was irradiated for 2 h with light at 280 nm and the consumption of $SF_6$ was monitored using the $SF_6$-monitor. A white precipitate was formed during the reaction. The resulting suspension was transferred into a 100 mL round bottom flask using small amounts of water to ensure complete transfer of the precipitate. The volatiles were evaporated under reduced pressure to afford a mixture of inorganic salts (e.g. KF, $K_2SO_3$). The residue was dissolved in water until a volume of 5 mL was obtained. An aliquot of 1 ml of this aqueous solution was analysed by quantitative $^{19}$F NMR spectroscopy using potassium triflate (10.0 mg, 0.0531 mmol) as internal standard. Assignment of the $^{19}$F NMR resonances: $\delta$ = -78.6 ($OTf^-$), -119.1 ($F^-$) ppm.

Table 4: Yields based on fluoride formation, determined by $^{19}$F qNMR spectroscopy, relative to the amount of KOH used assuming that 8 KOH are consumed per $SF_6$ molecule according to the following equation: 8 KOH + $SF_6$ + alcohol $\rightarrow$ 6 KF + $K_2SO_3$ + 5 $H_2O$ + aldehyde/ketone.

| Entry | Solvent | Yield (%) |
|---|---|---|
| 1. | water | 2 |
| 2. | water/acetone (50:50) | 4 |
| 3. | methanol | 6 |
| 4. | *n*-propanol | 9 |
| 5. | ethanol (tech.) | 42 |
| 6. | ethanol (abs.) | 1 |
| 7. | isopropanol (tech.) | >99 |
| 8. | isopropanol (HPLC grade) | >99 |
| 9. | *n*-butanol | 4 |
| 10. | *sec*-butanol | 86 |

The $SF_6$ consumption as a function of time for different solvents is shown in Fig. 4. Different solvents and solvent mixtures are shown with different symbols at 5-minute intervals.

Table 5: Estimated yields based on fluoride formation, determined by $^{19}$F qNMR spectroscopy, relative to the amount of KOH used assuming that 8 KOH are consumed per $SF_6$ molecule according to the following equation: 8 KOH + $SF_6$ + EtOH $\rightarrow$ 6 KF + $K_2SO_3$ + 5 $H_2O$ + acetaldehyde.

| Entry | Solvent | Additive | Yield (%) |
|---|---|---|---|
| 11. | ethanol (tech.) | - | 42 |
| 12. | ethanol (abs.) | - | 1 |

(continued)

| Entry | Solvent | Additive | Yield (%) |
|---|---|---|---|
| 13. | ethanol (abs.) | isopropanol (0.75 ml) | 4 |
| 14. | ethanol (abs.) | mesityl oxide (0.75 ml) | 1 |
| 15. | ethanol (abs.) | acetone (0.015 ml) | 12 |
| 16. | ethanol (abs.) | acetone (0.75 ml) | 56 |
| 17. | ethanol (abs.) | butanone (0.75 ml) | 55 |

The $SF_6$ consumption as a function of time for different additives is shown in Fig. 5. The $SF_6$ uptake by the EtOH/KOH system is represented. Different additives are shown with different symbols at 5-minute intervals.

Table 6: Estimated yields based on fluoride formation, determined by $^{19}F$ qNMR spectroscopy, relative to the amount of KOH used assuming that 8 KOH are consumed per $SF_6$ molecule according to the following equation: 8 KOH + $SF_6$ + sec-butanol $\rightarrow$ 6 KF + $K_2SO_3$ + 5 $H_2O$ + butanone.

| Entry | Solvent | Additive | Yield (%) |
|---|---|---|---|
| 18. | isopropanol | - | 98 |
| 19. | isopropanol | acetone (0.75 ml) | 97 |
| 20. | *sec*-butanol | - | 86 |
| 21. | *sec*-butanol | butanone (0.75 ml) | 90 |

The $SF_6$ consumption as a function of time for different ketone additives is shown in Fig. 6. Different additives are shown with different symbols at 5-minute intervals.

**2.6. Optimization of the reaction conditions for the KOH/iPrOH system using Reaction Setup 2**

**General Procedure:** A quartz tube (diameter 17 mm) was charged with a solution of potassium hydroxide (see Table 7) in technical grade isopropanol (15 ml). The solution was degassed by four freeze-pump-thaw cycles and the reaction tube was pressurized with $SF_6$ (see Table ). The reaction mixture was irradiated for 2 h with light at 280 nm and the consumption of $SF_6$ was monitored using the $SF_6$-monitor. A white precipitate was formed during the reaction. The resulting suspension was transferred into a 100 mL round bottom flask using small amounts of water to ensure complete transfer of the precipitate. The volatiles were evaporated under reduced pressure to afford a mixture of inorganic salts (e.g. KF, $K_2SO_3$). The residue was dissolved in water until a volume of 5 mL was obtained. An aliquot of 1 ml of this aqueous solution was analysed by quantitative $^{19}F$ NMR spectroscopy using potassium triflate (10.0 mg, 0.0531 mmol) as internal standard. Assignment of the $^{19}F$ NMR resonances: $\delta$ = -78.6 ($OTf^-$), -119.1 ($F^-$) ppm.

Table 7: Estimated yields based on fluoride formation, determined by $^{19}F$ qNMR spectroscopy, relative to the amount of KOH used assuming that 7.48 KOH are consumed per $SF_6$ molecule according to the following equation: 7.48 KOH + $SF_6$ + 1.55 iPrOH $\rightarrow$ 6 KF + 0.71 $K_2SO_3$ + 0.03 $K_2S_2O_3$ +0.24 $(iPrO)_2SO$ + 1.07 acetone + 5.08 $H_2O$.

| Entry | $SF_6$ pressure (bar) | Potassium hydroxide (g) | Condition | Yield (%) |
|---|---|---|---|---|
| 22. | 2.0 | 1.0 | starting with air atmosphere | 92 |
| 23. | 2.0 | 1.0 | starting with argon atmosphere | 90 |
| 24. | 2.0 | 1.0 | - | >99 |
| 25. | 0.5 | 1.0 | - | 91 |
| 26. | 1.0 | 1.0 | - | 84 |
| 27. | 1.5 | 1.0 | - | 83 |
| 28. | 2.0 | 0.5 | - | >99 |
| 29. | 2.0 | 1.5 | - | 80 |

(continued)

| Entry | $SF_6$ pressure (bar) | Potassium hydroxide (g) | Condition | Yield (%) |
|---|---|---|---|---|
| 30. | 2.0 | 1.0 | 2 LEDs were covered up | 86 |

The $SF_6$ consumption as a function of time for different initial gaseous components is shown in Fig. 7. Different gaseous components are shown with different symbols at 5-minute intervals.

The $SF_6$ consumption as a function of time for different $SF_6$ pressures is shown in Fig. 8 (symbols at 5-minute intervals are shown). Note that the amount of $SF_6$ transferred per cycle to the reaction vessel is lower when the $SF_6$ pressure increases.

The $SF_6$ consumption as a function of time for different KOH concentrations is shown in Fig. 9 (symbols shown at 5-minute intervals).

The $SF_6$ consumption as a function of time for different light intensities is shown in Fig. 10 (symbols shown at 5-minute intervals).

### 2.7. Scaleup of the $SF_6$ degradation with the KOH/iPrOH system using Reaction Setup 3

A borosilicate glass tube (diameter 42 mm) equipped with a quartz sight glass was charged with a solution of potassium hydroxide in technical grade isopropanol (80 ml). The reaction vessel was pressurized with $SF_6$ (1 bar) and irradiated with light at 280 nm for the indicated period of time. The consumption of $SF_6$ was monitored using the $SF_6$-monitor. A white precipitate formed during the reaction. The reaction mixture was transferred into a 250 mL round bottom flask using small amounts of water to ensure complete transfer of the precipitate. The volatiles were evaporated under reduced pressure to afford a mixture of inorganic salts (e.g. KF, $K_2SO_3$). The residue was dissolved in water until a volume of 40 mL was obtained. An aliquot of 1 ml of this mixture was analysed by quantitative $^{19}F$ NMR spectroscopy using potassium triflate (10 mg, 0.05 mmol) as internal standard. Assignment of the $^{19}F$ NMR resonances: $\delta$ = -78.6 ($OTf^-$), -119.1 ($F^-$) ppm.

Table 8: Estimated yields based on fluoride formation, determined by $^{19}F$ qNMR spectroscopy, relative to the amount of KOH used assumingthat 8 KOH are consumed per $SF_6$ molecule according to the following equation: $8\ KOH + SF_6 + iPrOH \rightarrow 6\ KF + K_2SO_3 + 5\ H_2O$ + acetone.

| Entry | Potassium hydroxide (g) | Irradiation time (h) | Yield (%) |
|---|---|---|---|
| 1. | 5.0 | 42 | >99 |
| 2. | 10.0 | 67 | 98 |
| 3. | 15.0* | 156 | 93 |
| *Due to the limited solubility of KOH in iPrOH, the initial reaction mixture was a suspension. | | | |

The $SF_6$-consumption as a function of time is shown in Fig. 11. Note that the initial reaction mixture was a suspension in the case of the 15 g KOH experiment due to the limited solubility. The interval indicated by the symbols is every 3 hours.

## 3. UV-vis absorption spectroscopy

### 3.1. UV-vis spectra of the KOH/iPrOH system

A standard quartz UV-vis cuvette (d = 1 cm) was charged with a solution of KOH (90 mg, 1.6 mmol) in HPLC grade isopropanol (3 mL), the cuvette was pressurized with 3 bar $SF_6$, and the cuvette was irradiated with light at 280 nm for 1 hour.

A series of UV-vis spectra were recorded for the KOH/iPrOH system confirming the formation of acetone during the irradiation reaction:

Fig. 12 shows UV-vis spectra of the KOH/iPrOH system. A) The initial KOH/iPrOH solution under $SF_6$ atmosphere, B) The reaction solution after irradiation with light at 280 nm for 1 hour and subsequent filtration, C) HPLC grade iPrOH with 1% acetone.

### 3.2. UV-vis spectra of the KOH/EtOH system

A standard quartz UV-vis cuvette (d = 1 cm) was charged with a solution of KOH (90 mg, 1.6 mmol) in ethanol (abs.) (3 mL), the cuvette was pressurized with 3 bar $SF_6$, and the cuvette was irradiated with light at 280 nm for 1 hour.

Fig. 13 shows UV-vis spectra of the KOH/EtOH system. A) The initial KOH/ EtOH solution under SF6 atmosphere, B) The reaction solution after irradiation with light at 280 nm for 1 hour and subsequent filtration.

### Claims

**1.** A method for decomposing $SF_6$ comprising the steps

(a) providing a solution of an alkali metal hydroxide in an alcohol of formula R-HCOH- R', wherein R and R' independently are selected from H, $C_1$ to $C_6$ - alkyl; cyclohexyl, cyclopentyl, methyl cyclopentyl, or $C_1$ to $C_6$ - alkoxy
(b) contacting the solution with $SF_6$
(c) exposing the solution with $SF_6$ in a closed vessel to electromagnetic radiation at a wavelength of between 240 nm to 300 nm, until $SF_6$ is decomposed.

**2.** A method according to claim 1, wherein the light has a wavelength of between 270 nm to 290 nm.

**3.** A method according to claim 1 or claim 2, wherein per 1 Mole of $SF_6$ to be decomposed, at least 8 Moles of metal hydroxide are provided in the solution.

**4.** A method according to claim 3, wherein per 1 Mole of $SF_6$ to be decomposed, at least 8,8 Moles of metal hydroxide are provided in the solution.

**5.** A method according to one of claims 1 to 4, wherein the metal hydroxide is NaOH, KOH or a mixture thereof.

**6.** A method according to one of claims 1 to 5, wherein R is H and R' is selected from $C_1$ to $C_6$ - alkyl; $C_1$ to $C_6$ - alkyloxy.

**7.** A method according to one of claims 1 to 6, wherein the alcohol of formula $R\text{-}C(OH)R_1R_2$ is selected from the group consisting of isopropanol, butan-2-ol, ethanol and mixtures thereof.

**8.** A method according to one of claims 1 to 7, wherein the solution further comprises a ketone, preferably acetone or butanone.

**9.** A method according to one of claims 1 to 8, wherein the closed vessel is permeable to electromagnetic radiation at wavelengths between 240 nm to 300 nm and the source for electromagnetic radiation is located outside the vessel.

**10.** A method according to one of claims 1 to 9, wherein $SF_6$ is dosed into the vessel at a pressure of up to 10 bar, preferably up to 3 bar.

**11.** A method according to one of claims 1 to 10, wherein $SF_6$ is continuously dosed into the vessel.

**12.** A method according to one of claims 1 to 11, wherein the decomposition of $SF_6$ is monitored in step (c).

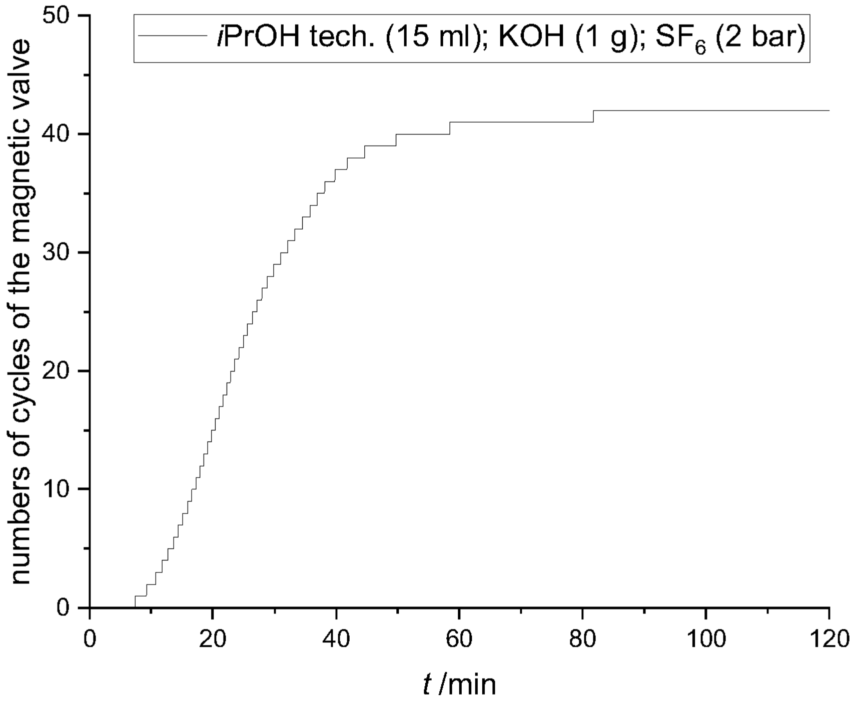

iPrOH tech. (15 ml); KOH (1 g); SF6 (2 bar)
numbers of cycles of the magnetic valve
t /min
0
10
20
30
40
50
0
20
40
60
80
100
120


Fig. 1

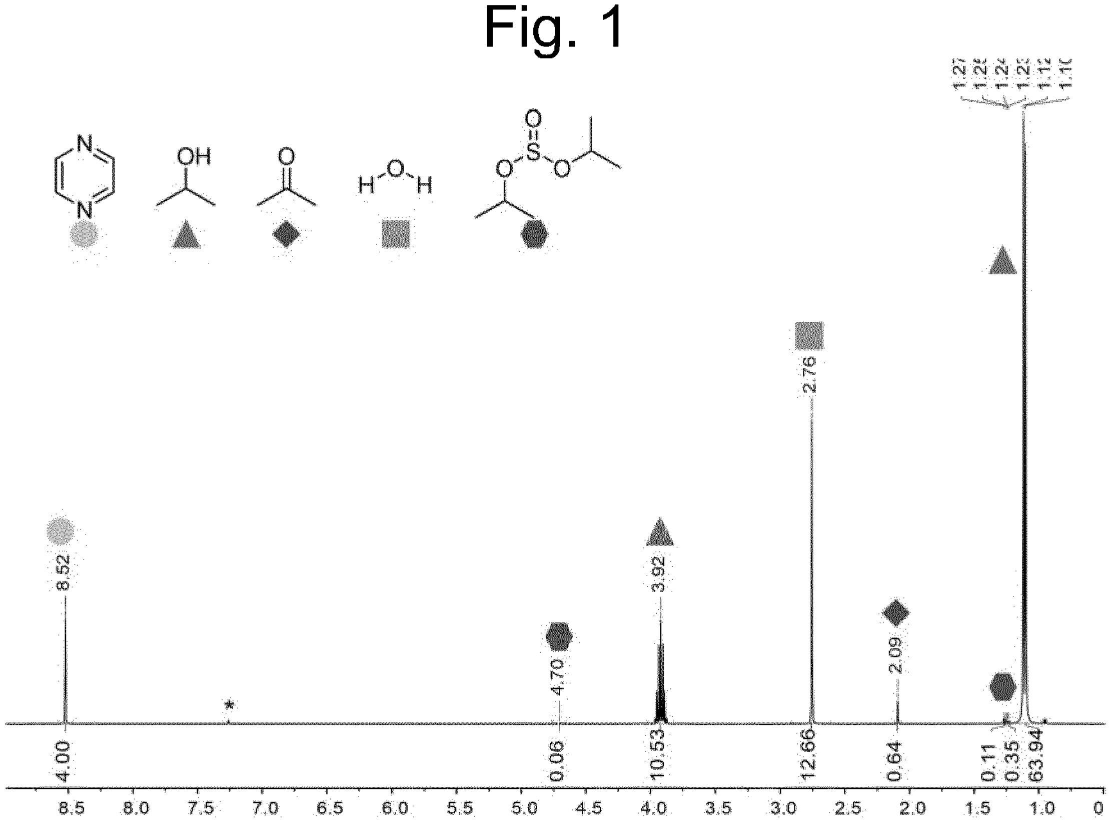

8.52
3.92
4.70
2.76
2.09
4.00
0.06
10.53
12.66
0.64
0.11
0.35
63.94


Fig. 2

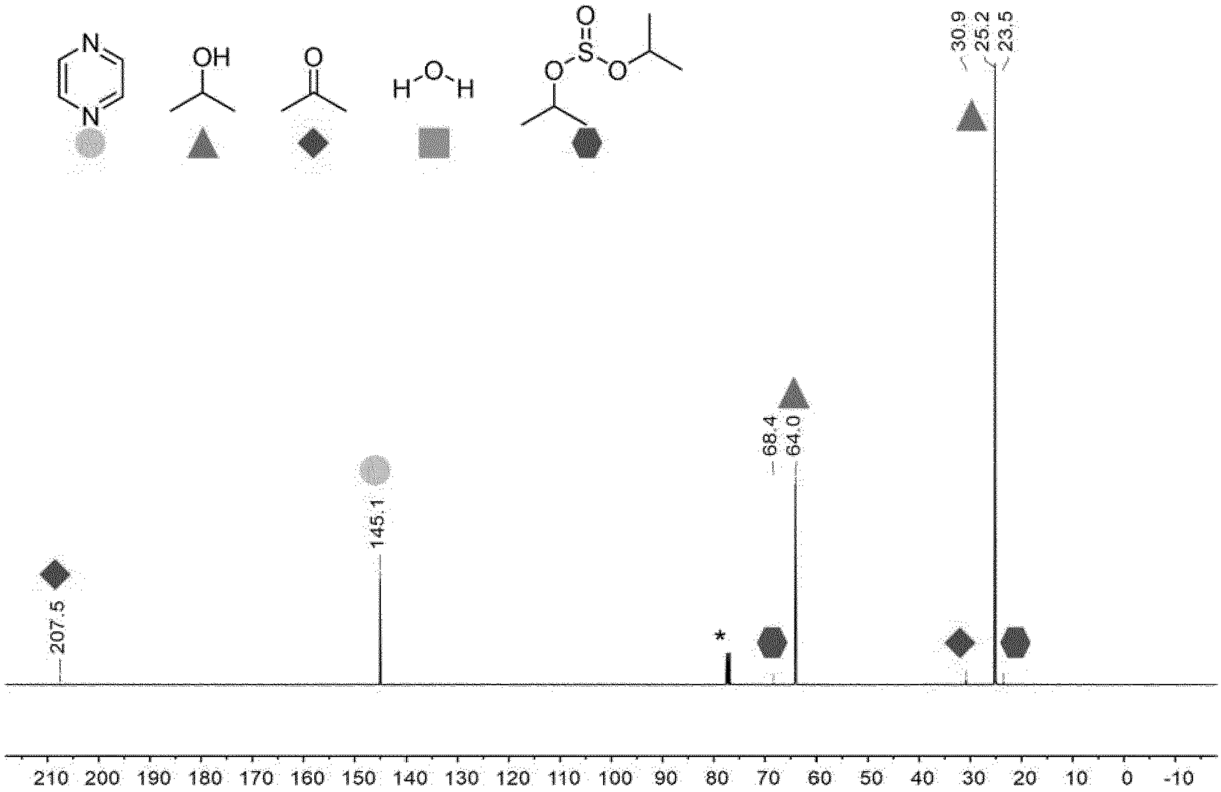

207.5
145.1
68.4
64.0
30.9
25.2
23.5
*
210 200 190 180 170 160 150 140 130 120 110 100 90 80 70 60 50 40 30 20 10 0 -10


Fig. 3

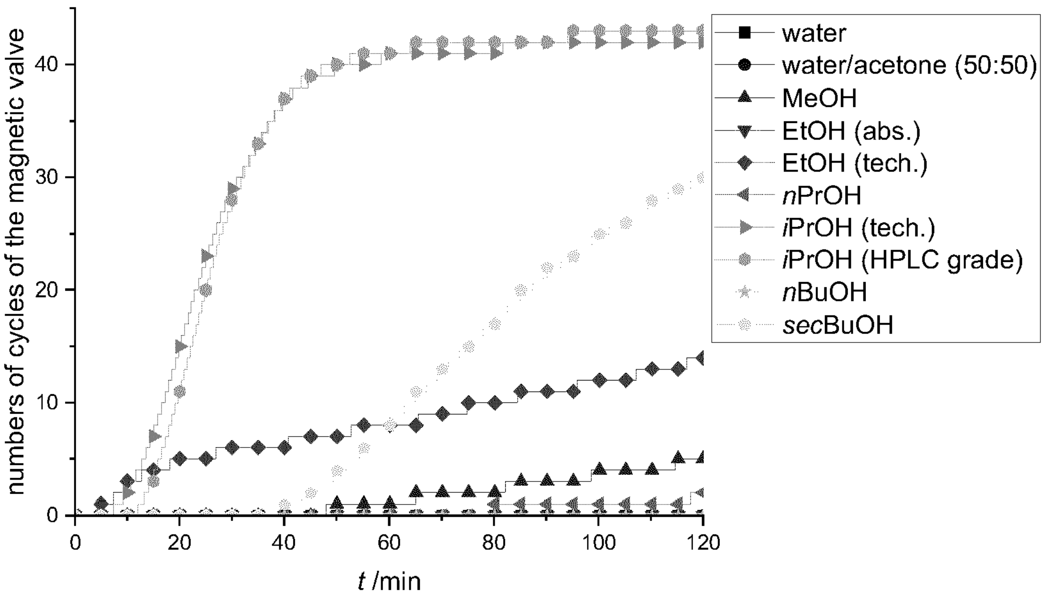

numbers of cycles of the magnetic valve
t /min
0 10 20 30 40
0 20 40 60 80 100 120
water
water/acetone (50:50)
MeOH
EtOH (abs.)
EtOH (tech.)
nPrOH
iPrOH (tech.)
iPrOH (HPLC grade)
nBuOH
secBuOH


Fig. 4

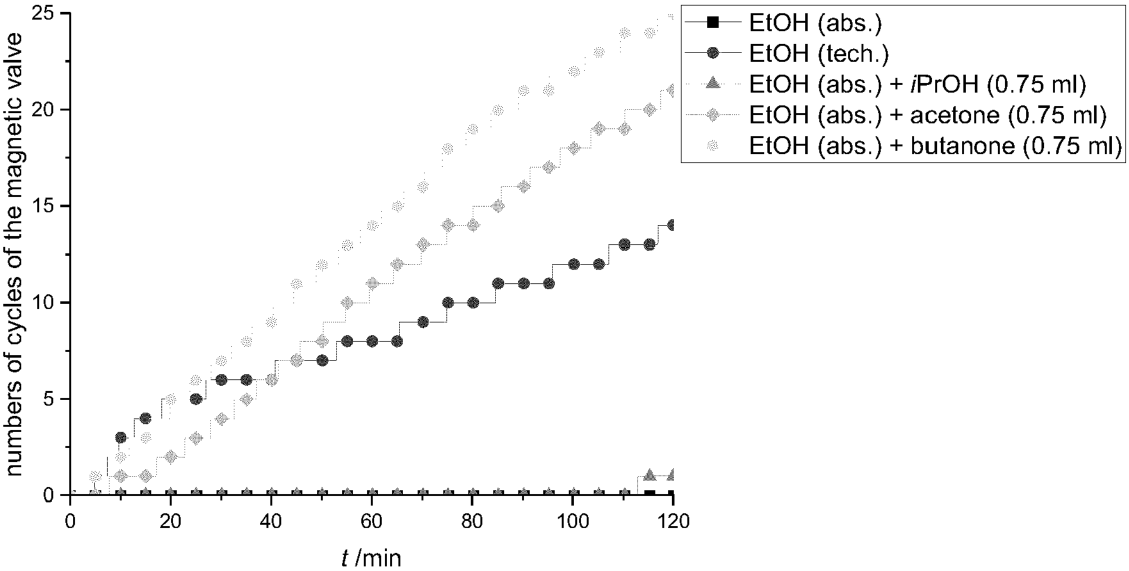

numbers of cycles of the magnetic valve
t /min
EtOH (abs.)
EtOH (tech.)
EtOH (abs.) + iPrOH (0.75 ml)
EtOH (abs.) + acetone (0.75 ml)
EtOH (abs.) + butanone (0.75 ml)


Fig. 5

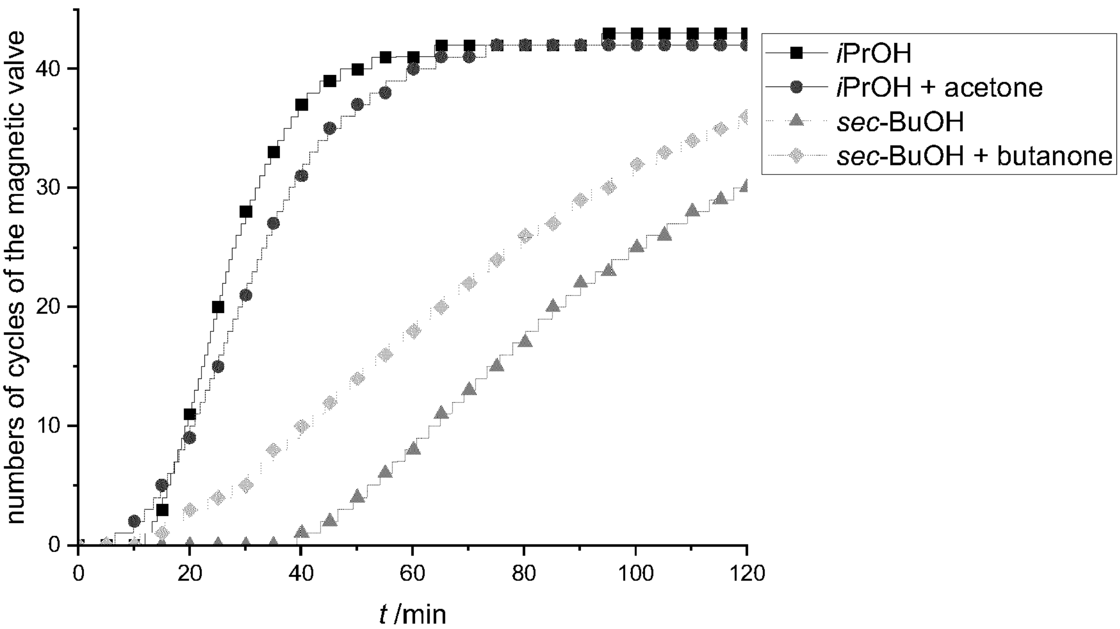

numbers of cycles of the magnetic valve
t /min
iPrOH
iPrOH + acetone
sec-BuOH
sec-BuOH + butanone


Fig. 6

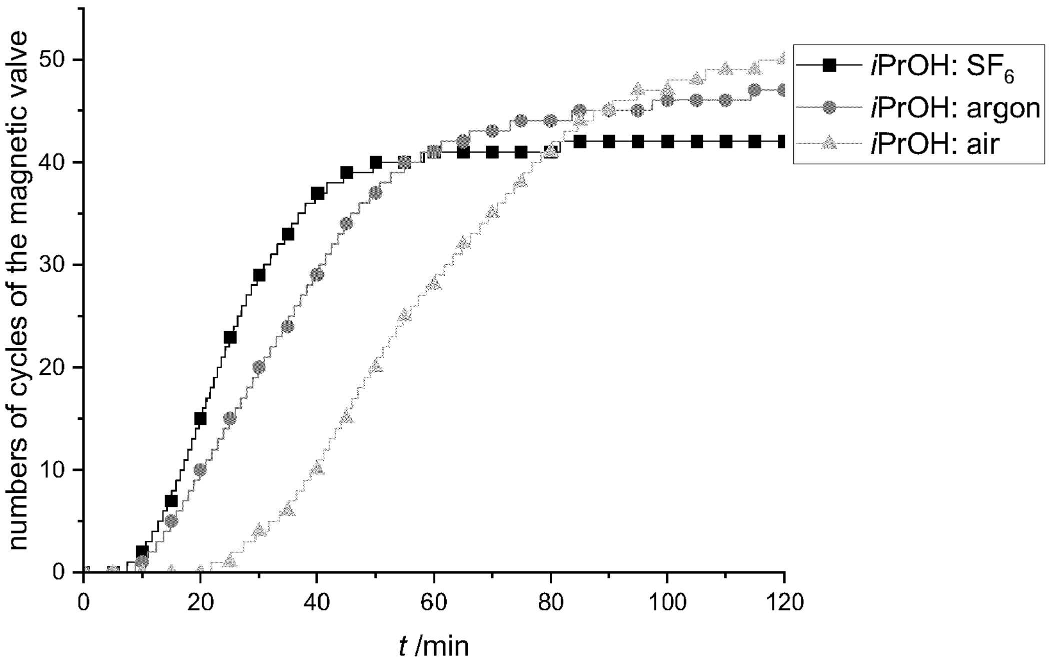
numbers of cycles of the magnetic valve
t /min
iPrOH: SF6
iPrOH: argon
iPrOH: air
0
10
20
30
40
50
0
20
40
60
80
100
120

Fig. 7

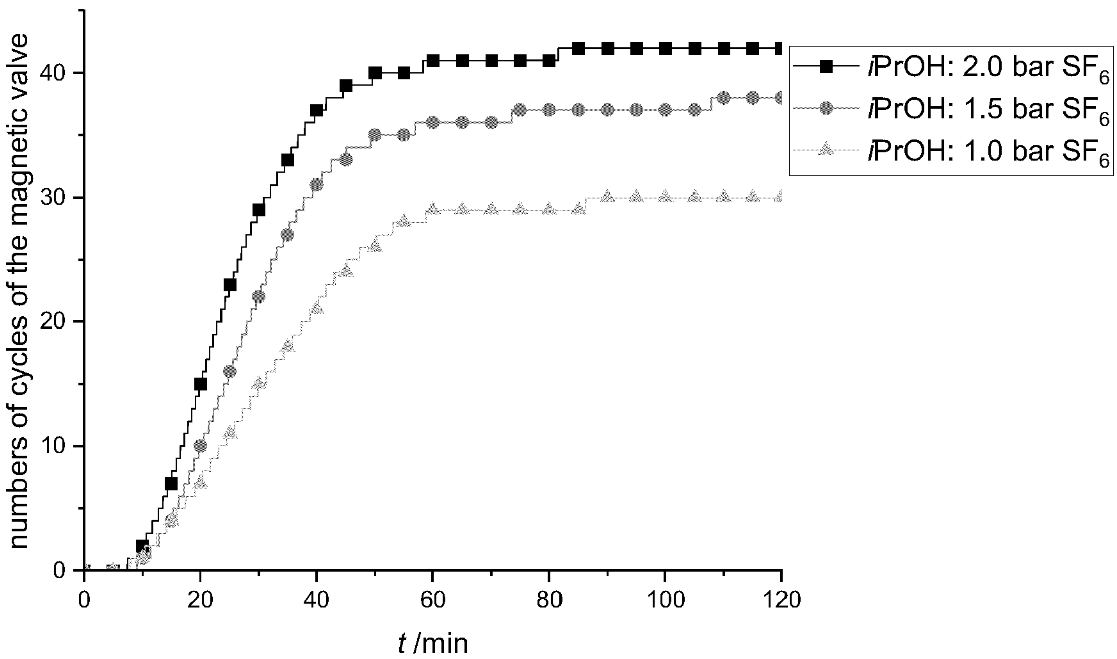
numbers of cycles of the magnetic valve
t /min
iPrOH: 2.0 bar SF6
iPrOH: 1.5 bar SF6
iPrOH: 1.0 bar SF6
0
10
20
30
40
0
20
40
60
80
100
120

Fig. 8

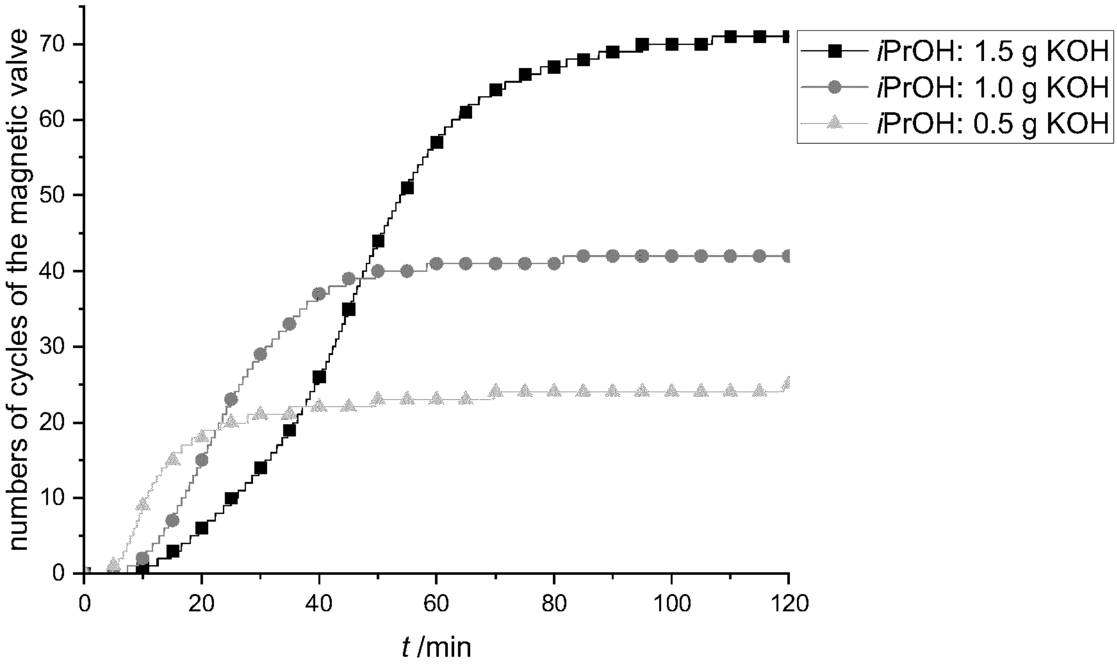
numbers of cycles of the magnetic valve
t /min
iPrOH: 1.5 g KOH
iPrOH: 1.0 g KOH
iPrOH: 0.5 g KOH
0
10
20
30
40
50
60
70
0
20
40
60
80
100
120

Fig. 9

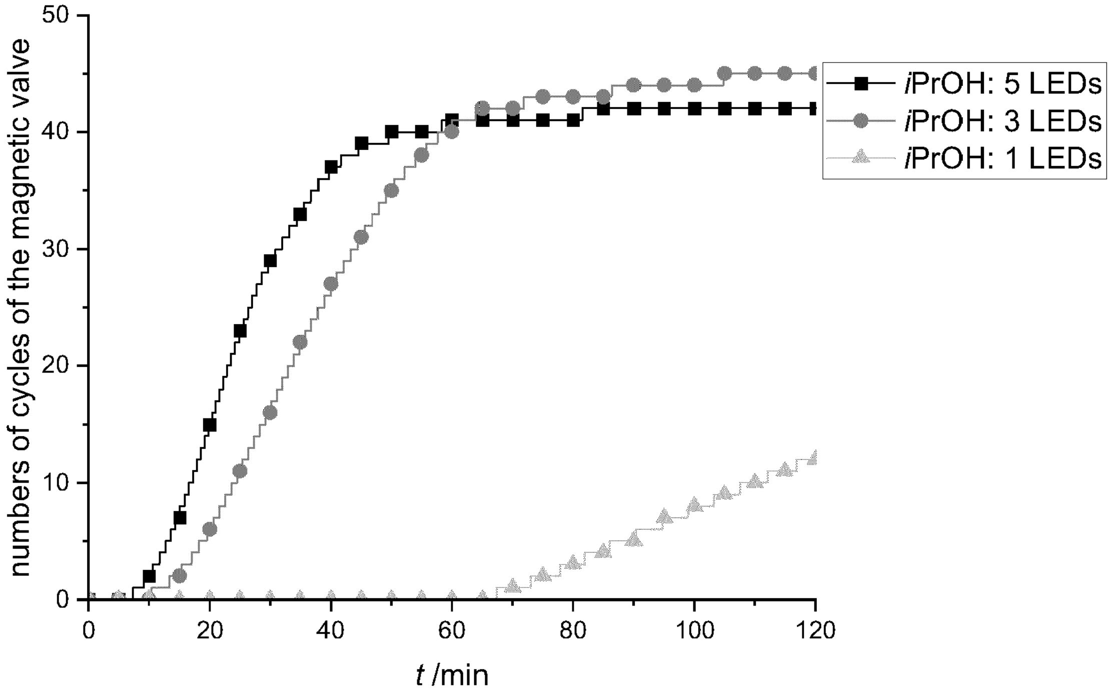
numbers of cycles of the magnetic valve
t /min
iPrOH: 5 LEDs
iPrOH: 3 LEDs
iPrOH: 1 LEDs
0
10
20
30
40
50
0
20
40
60
80
100
120

Fig. 10

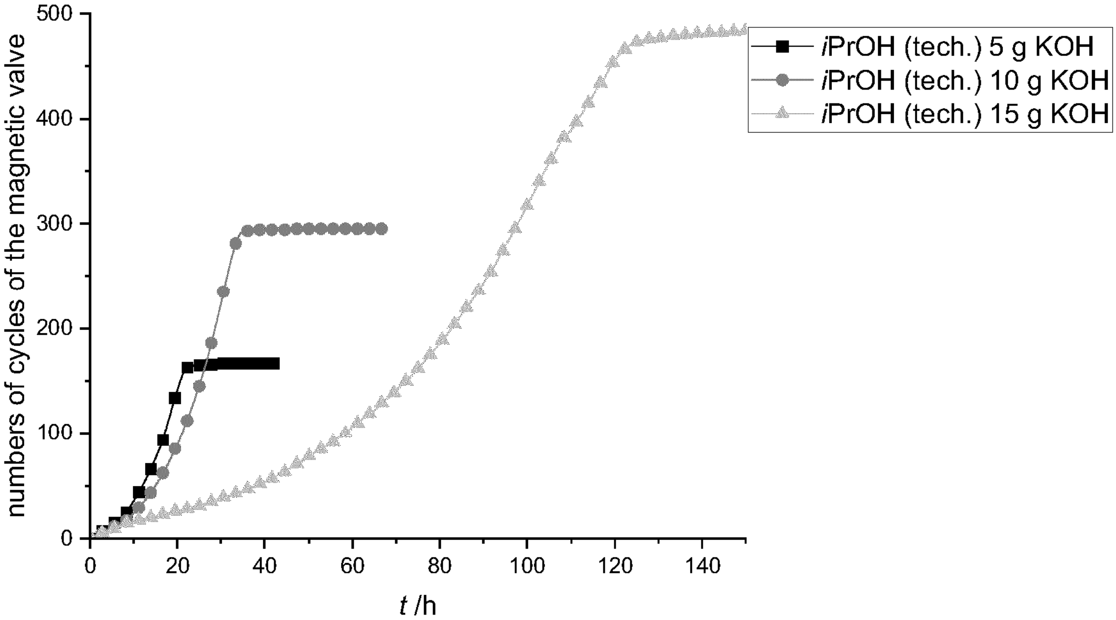
numbers of cycles of the magnetic valve
0
100
200
300
400
500
0
20
40
60
80
100
120
140
t /h
iPrOH (tech.) 5 g KOH
iPrOH (tech.) 10 g KOH
iPrOH (tech.) 15 g KOH

Fig. 11

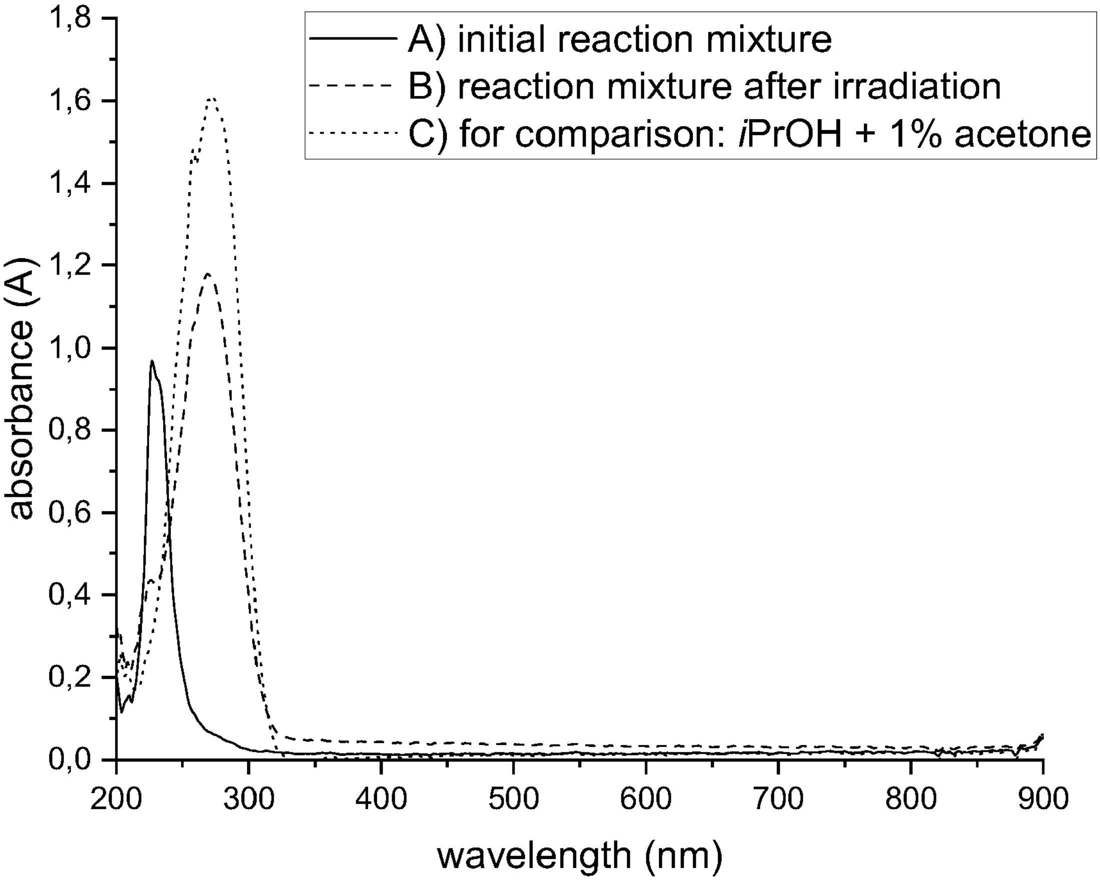
absorbance (A)
0,0
0,2
0,4
0,6
0,8
1,0
1,2
1,4
1,6
1,8
200
300
400
500
600
700
800
900
wavelength (nm)
A) initial reaction mixture
B) reaction mixture after irradiation
C) for comparison: iPrOH + 1% acetone

Fig. 12

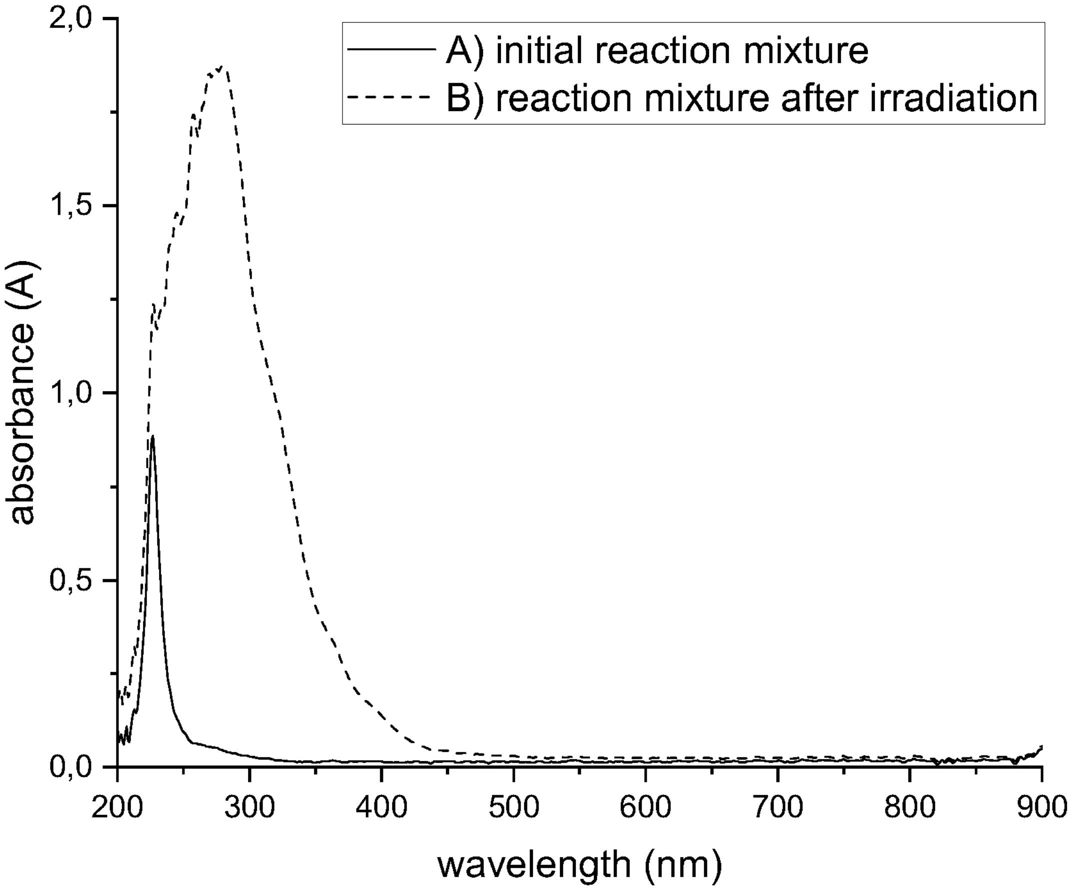
2,0
1,5
1,0
0,5
0,0
absorbance (A)
200
300
400
500
600
700
800
900
wavelength (nm)
A) initial reaction mixture
B) reaction mixture after irradiation

Fig. 13

Europäisches Patentamt
European Patent Office
Office européen des brevets

# EUROPEAN SEARCH REPORT

Application Number
EP 23 19 4776

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | EP 4 144 690 A1 (UNIV INNSBRUCK [AT]) 8 March 2023 (2023-03-08) * claims 1,7,10 * ----- | 1-12 | INV. C01B17/45 B01J19/12 |
| Y | JP 2000 279551 A (RAILWAY TECHNICAL RES INST; MITSUBISHI HEAVY IND LTD) 10 October 2000 (2000-10-10) * claims 1,2,4 * * paragraphs [0012] - [0014], [0027] * ----- | 1-12 | |
| Y | JP 2001 046547 A (MITSUBISHI HEAVY IND LTD; RAILWAY TECHNICAL RES INST) 20 February 2001 (2001-02-20) * claims 1-3 * * paragraphs [0006], [0009], [0010], [0026] * ----- | 1-12 | |
| A | JP 3 216868 B2 (CENTRAL GLASS CO LTD) 9 October 2001 (2001-10-09) * the whole document * ----- | 1-12 | |
| | | | TECHNICAL FIELDS SEARCHED (IPC) |
| | | | C01B B01J |

The present search report has been drawn up for all claims

1

| Place of search | Date of completion of the search | Examiner |
|---|---|---|
| The Hague | 7 February 2024 | Gerwann, Jochen |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT ON EUROPEAN PATENT APPLICATION NO.

EP 23 19 4776

This annex lists the patent family members relating to the patent documents cited in the above-mentioned European search report. The members are as contained in the European Patent Office EDP file on
The European Patent Office is in no way liable for these particulars which are merely given for the purpose of information.

07-02-2024

| Patent document cited in search report | | Publication date | Patent family member(s) | | Publication date |
|---|---|---|---|---|---|
| EP 4144690 | A1 | 08-03-2023 | EP 4144690 | A1 | 08-03-2023 |
| | | | WO 2023031317 | A1 | 09-03-2023 |
| JP 2000279551 | A | 10-10-2000 | NONE | | |
| JP 2001046547 | A | 20-02-2001 | NONE | | |
| JP 3216868 | B2 | 09-10-2001 | JP 3216868 | B2 | 09-10-2001 |
| | | | JP H09122442 | A | 13-05-1997 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description


- **LI HUANG et al.** Investigation of a new approach to decompose two potent greenhouse gases: Photoreduction of SF6 and SF5CF3 in the presence of acetone. *Chemosphere*, 2007, vol. 66 (5), 833-840, https://doi.org/10.1016/j.chemosphere.2006.06.028